(19) Europäisches Patentamt
European Patent Office
Office européen des brevets

(11) Veröffentlichungsnummer: **0 276 303 B1**

(12) **EUROPÄISCHE PATENTSCHRIFT**

(45) Veröffentlichungstag der Patentschrift:
06.03.91 Patentblatt 91/10

(51) Int. Cl.$^5$: **G02B 21/36, G02B 27/14**

(21) Anmeldenummer: 87906147.1

(22) Anmeldetag: 23.05.87

(86) Internationale Anmeldenummer:
PCT/DE87/00237

(87) Internationale Veröffentlichungsnummer:
WO 88/00714 28.01.88 Gazette 88/03

(54) **VERFAHREN ZUM FOTOGRAFIEREN MIKROSKOPISCHER OBJEKTE UND VORRICHTUNG ZU DESSEN DURCHFÜHRUNG.**

(30) Priorität: 12.07.86 DE 3623615
12.08.86 DE 3627354

(43) Veröffentlichungstag der Anmeldung:
03.08.88 Patentblatt 88/31

(45) Bekanntmachung des Hinweises auf die
Patenterteilung:
06.03.91 Patentblatt 91/10

(84) Benannte Vertragsstaaten:
AT CH DE FR GB IT LI NL SE

(56) Entgegenhaltungen:
DE-A- 1 901 008
DE-A- 3 432 635
US-A- 3 851 949
US-A- 4 118 719
US-A- 4 475 802

(73) Patentinhaber: Leica Industrieverwaltung
GmbH
Ernst-Leitz-Strasse 30 Postfach 20 20
W-6330 Wetzlar 1 (DE)

(72) Erfinder: LEITER, Herbert
Mühlrain 1
W-6330 Wetzlar 1 (DE)
Erfinder: KOCH, Herbert
Am Garten 2
W-6301 Biebertal 5 (DE)
Erfinder: HUND, Andreas
Forellenweg 3
W-6336 Solms-Niederbiel (DE)
Erfinder: REINHEIMER, Günter
Am Berg 11
W-6301 Biebertal 4 (DE)

## Beschreibung

Die Erfindung betrifft ein Verfahren zum wahlweisen Fotografieren mit verkürzten und gespeicherten Belichtungszeitwerten bzw. mit während des Belichtungsvorgangs korrigierten Belichtungszeitwerten, wobei ein ortsvariabler Meßfleck sowie Aufnahmefeldmarkierungen vor und nach der Aufnahme sichtbar gemacht werden, sowie eine Vorrichtung zur Durchführung dieses Verfahrens.

Aus der DE-PS 26 19 853 ist eine mikrofotografische Einrichtung als Aufsatzkamera für Mikroskope bekannt, die eine Belichtungskorrektur während des Belichtungsvorgangs mittels eines fest eingebauten 50/50-Neutral-Strahlenteilers ermöglicht. Dabei ist es nachteilig, daß der im Fotostrahlengang fest angeordnete Strahlenteiler 50% der zur Verfügung stehenden Lichtmenge für die Belichtungssteuerung verbraucht. Dadurch gelangen lediglich 50% des Lichtes zum Film. Die Folge sind um den Faktor "zwei" verlängerte Belichtungszeiten. Dieser Umstand wirkt sich insbesondere dann in sehr nachteiliger Weise aus, wenn – wie bei speziellen Mikroskopierverfahren üblich – Objekte sehr geringer Lichtintensität beobachtet und registriert werden sollen.

Es ist daher die Aufgabe der vorliegenden Erfindung, die Nachteile bekannter mikrofotografischer Einrichtungen und Verfahren zu beseitigen und ein Verfahren sowie eine Vorrichtung anzugeben, bei dem bzw. mit der ein hoher Zeitgewinn, insbesondere bei Verwendung von Großformat-Kamera-Aufsätzen, zu erzielen ist und außerdem eine Erweiterung der fotografischen Registriermöglichkeiten, vor allem von Fluoreszenz-Kleinbildaufnahmen mit verkürzten Belichtungszeiten, die sonst infolge Objektzerstörung bei den bisher üblichen langen Zeiten nicht mehr möglich waren, gegeben ist. Eine weitere Teilaufgabe besteht darin, den Vorteil der Belichtungskorrektur während der Belichtung für eine Reihe von Anwendungsfällen bei Fluoreszenzaufnahmen durch die Wahl des Belichtungsprogrammes weiterhin zu erhalten, also sowohl das Fotografieren mit verkürzten Belichtungszeiten wie auch die wahlweise Belichtungskorrektur während der Aufnahme miteinander zu vereinen.

Diese Aufgabe wird bei einem Verfahren der eingangs genannten Art erfindungsgemäß durch die Merkmale des Anspruchs 1, sowie jeweils alternativ durch die Ansprüche 2, 3 bzw. 4 gelöst. Weitere Ausgestaltungen ergeben sich aus den Verfahrensansprüchen 5 bis 8. Die Aufgabe wird weiterhin durch eine Vorrichtung zur Durchführung der eingangs genannten Verfahren gemäß Anspruch 9 gelöst ; weitere Ausgestaltungen ergeben sich aus den Vorrichtungsansprüchen 10 bis 14.

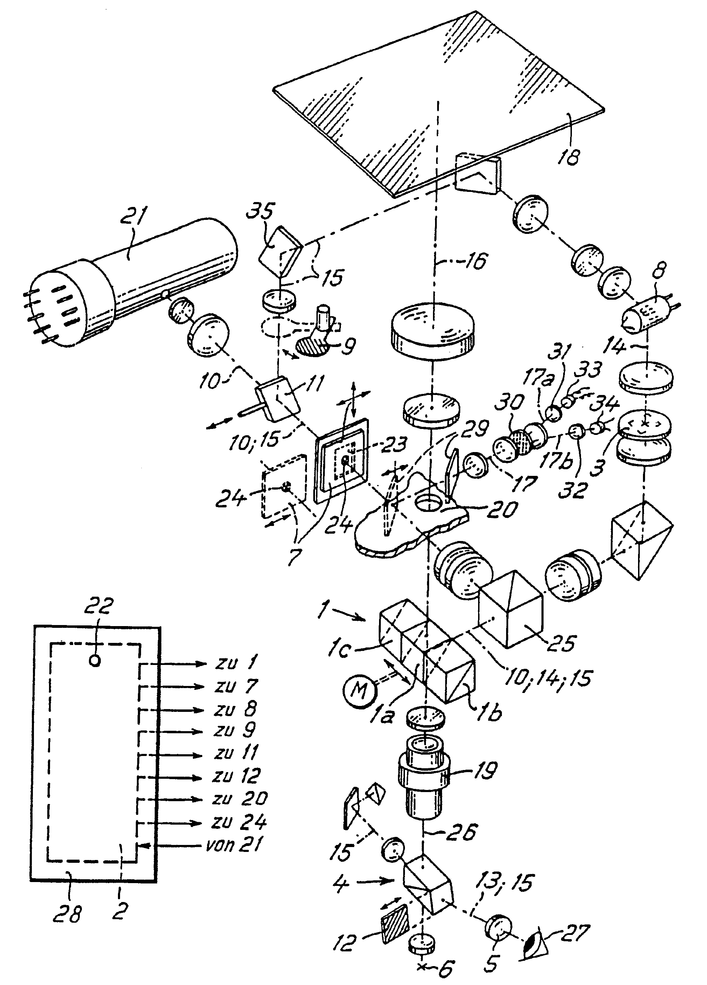

In der Zeichnung ist eine Ausführungsform der Erfindung schematisch dargestellt. Der Fotostrahlengang 16 geht von einem zu untersuchenden Objekt 6 aus und verläuft entlang der optischen Mikroskopachse 26 über ein Fotookular 19, ein Strahlenteiler-System 1 und einen Verschluß 20 hin zur Bildaufnahme-Ebene 18, in der beispielsweise ein Film positioniert sein kann.

Der Beobachtungsstrahlengang 13 geht ebenfalls von dem Objekt 6 aus und wird an einer Teiler-Fläche eines in der optischen Mikroskopachse 26 angeordneten Teiler-Prismas in das Mikroskopokular 5 umgelenkt, wo er zum Beobachter 27 gelangt. Eine Dunkelklappe 12 kann in Wirkstellung beobachterseitiges Störlicht bei bestimmten programmfunktionen fernhalten.

Von eineir Lampe 8 geht ein Beleuchtungs-Teilstrahlengang 14 aus, der nach Durchtritt durch eine Format-Strichplatte 3, die außerdem ein Schärfekreuz aufweist, und nach Umlenkung an einem entsprechenden Optikbauteil auf einen 50/50-Strahlenteiler 25 auftrifft, wo er mit einem weiteren Beleuchtungs-Teilstrahlengang 15 wiedervereinigt wird. Der Beleuchtungs-Teilstrahlengang 15 geht ebenfalls von der Lampe 8 aus und trifft nach zweimaliger Umlenkung auf einen im Meßstrahlengang 10 ausschiebbar angeordneten Vollspiegel, der auch als Drehspiegel 11 ausgebildet sein kann, und von dort aus durch eine ortsfeste Integralmeßblende 23 sowie einen unmittelbar dahinter ausschiebbar angeordneten Detailmeßblenden-Träger 7, der innerhalb seiner Ebene ortsvariabel gehaltert ist, auf den schon erwähnten Strahlenteiler 25, von dem aus der vereinigte Beleuchtungsstrahlengang 14,15 auf das Strahlenteiler-System 1 fällt. Im dargestellten Fall befindet sich der Glaswürfel 1a in Wirkstellung, also in der optischen Mikroskopachse 26. Dieser Glaswürfel 1a besitzt eine vollverspiegelte Diagonalfläche, die in 45°-Stellung zur vertikalen optischen Mikroskopachse 26 und zum vereinigten Beleuchtungsstrahlengang 14, 15 steht.

Der neben dem Glaswürfel 1a angeordnete Strahlenteiler-Würfel 1c weist eine Strahlenteiler-Fläche in Diagonalstellung auf, die ein diskretes Transmissions-/Reflexions-Verhältnis zwischen 95/5 und 99,5/0,5 – vorzugsweise 99/1 – aufweist.

Der Strahlenteiler-Würfel 1b weist eine Teiler-Fläche in Diagonalstellung auf, die ein Transmissions-/Reflexions-Verhältnis 50/50 aufweist. Es sei betont, daß zusätzlich oder alternativ zu den angegebenen Strahlenteiler-Würfeln auch solche Verwendung finden können, die andere physikalische oder geometrische Strahlenteilungseigenschaften aufweisen. Die Verstellung des Strahlenteiler-Systems 1 erfolgt motorisch.

Der Meßstrahlengang 10 geht vom Strahlenteiler-System 1, genauer von dem in der Zeichnung in Wirkstellung befindlichen Glaswürfel 1a, aus und wird nach Umlenkung an dem Strahlenteiler 25 bei ausgeklapptem Vollspiegel (oder Drehspiegel 11) auf den Lichtempfänger 21 geworfen. Der Drehspiegel 11, der in der zeichnerischen Darstellung als ausschiebbarer Klappspiegel dargestellt ist, wird programmgesteuert motorisch bewegt und besitzt ein Labyrinth, welches in Wirkstellung den Lichtempfänger 21 lichtdicht abschließt. Dies bringt Vorteile für die Dunkelstromkompensation. So ist es beispielsweise bei bekannten mikrofotografischen Einrichtungen nur möglich, eine Dunkelstromkompensation zu realisieren, wenn ein Foto-Tubus benutzt wird, der eine Schieberstellung enthält, in der kein Licht zur Lichtmeßeinrichtung gelangen kann.

Die programmgesteuert motorisch in den Strahlengang 15 einschwenkbare Dunkelklappe 9 hat zwei Funktionen. Bei Integralmessung wird für die Bildbeobachtung die Dunkelklappe 9 in Wirkstellung geschaltet, um zu verhindern, daß die Integralmeßblende 23 von hinten beleuchtet wird. Diese würde sich andernfalls in ihrer ganzen Größe dem Objektbild überlagern. Die zweite Funktion besteht darin, daß sie bei jeder Lichtmessung eingeschaltet bleibt. Damit wird verhindert, daß Streulicht aus dem Entlüftungssystem des Lampengehäuses sich dem Meßlicht überlagert und die Messung verfälscht.

Der Wechsel zwischen Integral- und Detailmessung erfolgt in der erfindungsgemäßen Vorrichtung bzw. den entsprechenden Verfahren in der Weise, daß die Integralmeßblende 13 immer fest an ihrem Ort verbleibt. Für eine Spotmessung wird die ortsvariable Teilmeßblende 24 bzw. ihr Träger 7 beispielsweise über einen HubMagneten dicht vor die Integralmeßblende 23 durch Knopfdruck vom Steuergerät 28 geschaltet. Ein bei einem bekannten mikrofotografischen Verfahren bisher übliches Graufilter (1%), welches die Transmission der Integralmeßblende an die Transmission der Detailmeßblende anpaßte, kann bei der vorliegenden Erfindung entfallen, da statt dessen ein Strahlenteiler-Würfel 1c in Wirkstellung gefahren werden kann. Der Detailmeßblenden-Träger 7 ist beispielsweise mit einem Hubmagneten auf einem Schlitten montiert, der über zwei Elektromotore vom Steuergerät 28 aus bedient wird.

Die Markierungen für Aufnahmefelder auf der Format-Strichplatte 3 können auf einer beweglichen Maske aufgebracht sein, die sich einer Kugelschalen-Fläche anpaßt, die der Bildfeldwölbung entspricht. Dadurch bleibt die Bildschärfe der Markierungen über das gesamte Feld erhalten.

Im Bedarfsfall kann ein Farbtemperatur-Meßstrahlengang 17 realisiert werden. Die Farbtemperaturmessung wird eingeleitet durch Einschub des Umlenkspiegels 29 in den Meßstrahlengang 10. Der in Wirkstellung befindliche Spiegel 29 wird beispielsweise von einer Reflexlichtschranke registriert, die ihrerseits das Steuergerät 28 auf Farbtemperaturmessung umschaltet. Die gemessene Farbtemperatur erscheint in der Anzeige des Steuergerätes 28 anstelle der sonst angezeigten Filmempfindlichkeit.

Rein schematisch ist in der Figur das Steuergerät 28 mit zugehörigem Belichtungssteuersystem 2 und der Auslösetaste 22 dargestellt. Die Pfeile verdeutlichen die funktionalen Verknüpfungen zu den einzelnen opto-mechanischen Baugruppen.

Anstelle eines Farbtemperaturmeßansatzes kann über den Umlenkspiegel 29 auch ein Computerblitz-Sensor mit Gehäuse angesetzt werden. Die Stellung des Spiegels 29 wird wiederum von einer Reflexlichtschranke registriert. Eine entsprechende opto-elektronische Ankopplung führt im Steuergerät 28 zu einer automatischen Blitzbereitschaft, wobei bei dieser Funktion automatisch auf Integralmessung geschaltet wird.

Das hohe Transmissions-/Reflexions-Verhältnis von beispielsweise 99/1 der Teilerfläche des Strahlenteiler-Würfels 1c wird erreicht durch die Brechzahldifferenz zwischen Glas und Kittschicht des betreffenden Bauteils. Das Strahlenteiler-System 1 wird programmgesteuert motorisch bewegt und durch nicht mitdargestellte Gabellichtschranken positioniert.

## Ansprüche

1. Verfahren zum Fotografieren mikroskopischer Objekte unter Berücksichtigung zu ermittelnder Belichtungszeitwerte sowie zum Sichtbarmachen eines ortsvariablen Meßflecks und einer Aufnahmeformatmarkierung vor und nach der Aufnahme, **dadurch gekennzeichnet**, daß ein im Fotostrahlengang (16) querverschieblich angeordnetes Strahlenteiler-System (1), welches Teilerflächen unterschiedlicher Transmissions-/Reflexions-Verhältnisse (1b ; 1c) und zusätzlich eine Vollverspiegelungsfläche (1a) aufweist, ein im Meßstrahlengang (10) vor einem Lichtempfänger (21) angeordneter Drehspiegel (11) sowie eine im Beleuchtungsstrahlengang (15) angeordnete Dunkelklappe (9) zur Realisierung mikrofotografischer Aufnahmen mit verkürzten und gespeicherten Belichtungszeiten unter Ausführung einer Spotmessung mittels des ortsvariablen Meßflecks nach folgenden Verfahrensschritten angesteuert und positioniert werden :

(a) das Strahlenteiler-System (1) wird in der optischen Mikroskopachse (26) derart positioniert, daß die Vollverspiegelungsfläche des Glaswürfels (1a) in Diagonalstellung die Beleuchtungsstrahlengänge (14 bzw. 15) über ein Fotookular (19) in das Mikroskopokular (5) umlenkt ;

(b) nach Einstellen der Bildschärfe, Auswählen des Bildausschnitts des Objekts (6) und Positionieren einer ortsvariablen Detailmeßblende (24) durch den Beobachter (27) in Wirkstellung erfolgt ein

(c) Betätigen einer Auslösetaste (22) an einem Steuergerät (28), wodurch folgende Funktionen ausgelöst werden :

(c1) eine Lampe (8) schaltet sich aus ;

(c2) die Dunkelklappe (9) schwenkt in den Beleuchtungsstrahlengang (15) ein ;

(c3) der Drehspiegel (11) schwenkt aus dem Meßstrahlengang (10) aus ;

(c4) eine weitere Dunkelklappe (12) im Beobachtungsstrahlengang (13) klappt in Wirkstellung ;

(c5) der Lichtempfänger (21) mißt das durch die Detailmeßblende (24) fallende Licht, der durch den Lichtempfänger (21) gemessene Wert wird sodann einem Belichtungssteuersystem (2) zugeführt und gespeichert ;

(c6) das Strahlenteiler-System (1) wird nunmehr derart positioniert, daß der Strahlenteiler-Würfel (1c) mit derjenigen Teilerfläche in Diagonalstellung quer zur optischen Mikroskopachse (26) gelangt, die ein Transmissions-/ Reflexionsverhältnis von 99/1 aufweist ;

(c7) das Belichtungssteuersystem (2) öffnet nach Maßgabe des jeweils gespeicherten Wertes einen Verschluß (20) für eine Belichtung eines in der Ebene (18) angeordneten Bildaufnahmemediums, beispielsweise eines Films ;

(c8) nach erfolgter Belichtung und Sperren des Verschlusses (20) für den weiteren Durchtritt des Fotostrahlengangs (16) wird das Strahlenteiler-System (1) wieder in die Ausgangsposition – also der Glaswürfel (1a) in Wirkstellung – zurückgeführt, wobei gleichzeitig die Lampe (8) eingeschaltet, die Dunkelklappen (9 bwz. 12) weggeklappt, der Drehspiegel (11) in den Meßstrahlengang (10) geschwenkt und das Bildaufnahmemedium weitertransportiert werden.

2. Verfahren zum Fotografieren mikroskopischer Objekte unter Berücksichtigung zu ermittelnder Belichtungszeitwerte sowie zum Sichtbarmachen einer Aufnahmeformatmarkierung vor und nach der Aufnahme, **dadurch gekennzeichnet**, daß ein im Fotostrahlengang (16) querverschieblich angeordnetes Strahlenteiler-System (1), welches Teilerflächen unterschiedlicher Transmissions-/Reflexions-Verhältnisse (1b ; 1c) und zusätzlich eine Vollverspiegelungsfläche (1a) aufweist, ein im Meßstrahlengang (10) vor einem Lichtempfänger (21) angeordneter Drehspiegel (11) sowie eine im Beleuchtungsstrahlengang (15) angeordnete Dunkelklappe (9) zur Realisierung mikrofotografischer Aufnahmen mit verkürzten und korrigierten Belichtungszeiten unter Ausführung einer Belichtungskorrektur bei Integralmessung nach folgenden Verfahrensschritten angesteuert und positioniert werden :

(a) das Strahlenteiler-System (1) wird in der optischen Mikroskopachse (26) derart positioniert, daß die Vollverspiegelungsfläche des Glaswürfels (1a) in Diagonalstellung den Beleuchtungsstraglengang (14) über ein Fotookular (19) in das Mikroskopokular (5) umlenkt ;

(b) nach Einstellen der Bildschärfe und Auswählen des Bildausschnitts des Objekts (6) durch den Beobachter (27) erfolgt ein

(c) Betätigen einer Auslösetaste (22) an einem Steuergerät (28), wodurch folgende Funktionen ausgelöst werden :

(c1) bei in dem Beleuchtungsstrahlengang (15) belassener Dunkelklappe (9) wird eine Lampe (8) abgedeckt ;

(c2) der Drehspiegel (11) wird aus dem Meßstrahlengang (10) geschwenkt ;

(c3) ein Detailmeßblenden-Träger (7) wird aus dem Meßstrahlengang (10) geschwenkt ;

(c4) eine weitere Dunkelklappe (12) wird in den Beobachtungsstrahlengang (13) eingeführt ;

(c5) das Strahlenteiler-System (1) wird nunmehr derart positioniert, daß der Strahlenteiler-Würfel (1c) mit derjenigen Teilerfläche in Diagonalstellung zur optischen Mikroskopachse (26) gelangt, die ein Transmissions-/Reflexionsverhältnis von 99/1 aufweist ;

(c6) der Lichtempfänger (21) mißt das durch eine ortsfeste Integralmeßblende (23), die durch Verschieben des die Detailmeßblende (24) aufweisenden Trägers (7) aus dem Meßstrahlengang (10) freigelegt wird, fallende Licht und der gemessene Wert wird sodann einem Belichtungssteuersystem (2) zugeführt und gespeichert ;

(c7) das Belichtungssteuersystem (2) öffnet nach Maßgabe des jeweils gemessenen Wertes einen Verschluß (20) für eine Belichtung eines in der Ebene (18) angeordneten Bildaufnahmemediums, beispielsweise eines Films, wobei die Belichtungsmessung während des Belichtungsvorgangs erfolgt und bei sich verändernden Objekthelligkeiten gleichzeitig eine entsprechende Korrektur der Belichtungszeit vorgenommen wird,

(c8) nach erfolgter Belichtung und Sperren des Verschlusses (20) für den weiteren Durchtritt des Fotostrahlengangs (16) wird das Strahlenteiler-System (1) wieder in die Ausgangsposition – der Glaswürfel (1a) also in Wirkstellung – zurückgeführt, wobei gleichzeitig die Lampe (8) aufgedeckt, der Drehspiegel (11) in den Meßstrahlengang (10) geschwenkt, die Dunkelklappen (9 bzw. 12) weggeklappt und das Bildaufnahmemedium weitertransportiert werden.

3. Verfahren zum Fotografierei mikroskopischer Objekte unter Berücksichtigung zu ermittelnder Belichtungszeitwerte sowie zum Sichtbarmachen eines ortsvariablen Meßflecks und einer Aufnahmeformatmarkierung vor und nach der Aufnahme, **dadurch gekennzeichnet**, daß ein im Fotostrahlengang (16) querverschieblich angeordnetes Strahlenteiler-System (1), welches Teilerflächen unterschiedlicher Transmissions-/Reflexions-Verhältnisse (1b ; 1c) und zusätzlich eine Vollverspiegelungsfläche (1a) aufweist, ein im Meßstrahlengang (10) vor einem Lichtempfänger (21) angeordneter Drehspiegel (11) sowie eine im Beleuchtungsstrahlengang (15) angeordnete Dunkelklappe (9) zur Realisierung mikrofotografischer Aufnahmen mit korrigierten Belichtungszeiten unter Ausführung einer Spotmessung mittels des ortsvariablen Meßflecks nach folgenden Verfahrensschritten angesteuert und positioniert werden :

(a) das Strahlenteiler-System (1) wird in der optischen Mikroskopachse (26) derart positioniert, daß der Glaswürfel (1a) mit Vollspiegel in Diagonalstellung die Beleuchtungsstrahlengänge (14 und 15) über ein Fotookular (19) in das Mikroskopokular (5) umlenkt ;

(b) nach Einstellen der Bildschärfe und Auswählen des Bildausschnitts des Objekts (6) durch den Beobachter (27) wird eine ortsvariable Detailmeßblende (24) bei aus dem Beleuchtungsstrahlengang (15) ausgeklappter Dunkelklappe (9) rückwärtig beleuchtet und mit einer für eine korrekte Belichtung repräsentativen Stelle des Objekts (6) zur Deckung gebracht ;

(c) danach wird eine Auslösetaste (22) an einem Steuergerät (28) betätigt, wodurch folgende Funktionen ausgelöst werden :

(c1) eine Lampe (8) schaltet sich aus ;

(c2) die Dunkelklappe (9) schwenkt in den Beleuchtungsstrahlengang (15) ein ;

(c3) der Drehspiegel (11) wird aus dem Meßstrahlengang (10) geschwenkt ;

(c4) eine weitere Dunkelklappe (12) wird in den Beobachtungsstrahlengang (13) eingeführt ;

(c5) das Strahlenteiler-System (1) wird nunmehr derart positioniert, daß der Strahlenteiler-Würfel (1b) mit derjenigen Teilerfläche in Diagonalstellung zur optischen Mikroskopachse (26) gelangt, die ein Transmissions-/Reflexions-Verhältnis von 50/50 aufweist ;

(c6) der Lichtempfänger (21) mißt das anfallende Licht und der gemessene Wert wird sodann einem Belichtungssteuersystem (2) zugeführt und

(c7) das Belichtungssteuersystem (2) öffnet unter Berücksichtigung der gemessenen Lichtmenge einen Verschluß (20) für eine Belichtung eines in der Ebene (18) angeordneten Bildaufnahmemediums, beispielsweise eines Films, wobei auftretende Helligkeitsänderungen des Objektes (6) korrigiert werden ;

(c8) nach erfolgter Belichtung und Sperren des Verschlusses (20) für den weiteren Durchtritt des Fotostrahlengangs (16) wird das Strahlenteiler-System (1) wieder in die Ausgangsposition – der Glaswürfel (1a) also in Wirkstellung – zurückgeführt, wobei gleichzeitig die Lampe (8) eingeschaltet, der Drehspiegel (11) in den Meßstrahlengang (10) geschwenkt, die Dunkelklappen (9 bzw. 12) weggeklappt und das Bildaufnahmemedium weitertransportiert werden.

4. Verfahren zum Fotografieren mikroskopischer Objekte unter Berücksichtigung zu ermittelnder Belichtungszeitwerte sowie zum Sichtbarmachen eines ortsvariablen Meßflecks und einer Aufnahmeformatmarkierung vor und nach der Aufnahme, **dadurch gekennzeichnet**, daß ein im Fotostrahlengang (16) querverschieblich angeordnetes Strahlenteiler-System (1), welches einen Strahlenteiler-Würfel (1c) mit einer Teilerschicht mit einem diskreten, zwischen 95/5 und 99,5/0,5 liegenden Transmissions-/Reflexions-Verhältnis und zusätzlich einen Glaswürfel mit einer Vollverspiegelungsfläche (1a) aufweist, ein im Meßstrahlengang (10) vor einem Lichtempfänger (21) angeordneter Drehspiegel (11) sowie eine im Beleuchtungsstrahlengang (15) angeordnete Dunkelklappe (9) zur Realisierung mikrofotografischer Aufnahmen mit verkürzten und korrigierten Belichtungszeiten unter Ausführung einer Spotmessung mittels des ortsvariablen Meßflecks nach folgenden Verfahrensschritten angesteuert und positioniert werden :

(a) das Strahlenteiler-System (1) wird in der optischen Mikroskopachse (26) derart positioniert, daß die Vollverspiegelungsfläche des Würfels (1a) in Diagonalstellung die Beleuchtungsstrahlengänge (14 bzw. 15) über ein Fotookular (19) in das Mikroskopokular (5) umlenkt ;

(b) nach Einstellen der Bildschärfe, Auswählen des Bildausschnitts des Objekts (6) und Positionieren einer ortsvariablen Detailmeßblende (24) durch den Beobachter (27) in Wirkstellung erfolgt ein

(c) Betätigen der Auslösetaste (22) an einem Steuergerät (28), wodurch folgende Funktionen ausgelöst werden :

(c1) die Lampe (8) schaltet sich aus ;

(c2) die Dunkelklappe (9) schwenkt in den Beleuchtungsstrahlengang (15) ein ;

(c3) der Drehspiegel (11) schwenkt aus dem Meßstrahlengang (10) aus ;

(c4) eine weitere Dunkelklappe (12) im Beobachtungsstrahlengang (13) klappt in Wirkstellung ;

(c5) der Lichtempfänger (21) mißt das durch die Detailmeßblende (24) fallende Licht, der durch den Lichtempfänger (21) gemessene Wert wird sodann einem Belichtungssteuersystem (2) zugeführt und gespeichert ;

(c6) das Strahlenteiler-System (1) wird nunmehr derart positioniert, daß der Strahlenteiler-Würfel (1c) in Diagonalstellung zur optischen Mikroskopachse (26) gelangt ;

(c7) der Detailmeßblenden-Träger (7) mit der Detailmeßblende (24) schwenkt aus dem Meßstrahlengang (15) heraus ;

(c8) der Lichtempfänger (21) mißt das durch die Integralmeßblende (23) fallende Licht und der durch den Lichtempfänger (21) gemessene Wert wird wieder dem Belichtungssteuersystem (2) zugeführt, welches sodann dem soeben gemessenen Wert eine solche Belichtungszeit zuordnet, die derjenigen Zeit entspricht, welche gemäß dem Teilschritt (c5) ermittelt wurde ;

(c9) das Belichtungssteuersystem (2) öffnet einen Verschluß (20) für eine Belichtung eines in der Ebene (18) angeordneten Bildaufnahmemediums, beispielsweise eines Films, wobei die Belichtungsmessung während des Belichtungsvorgangs erfolgt und bei sich verändernden Objekthelligkeiten gleichzeitig eine entsprechende Korrektur der Belichtungszeit vorgenommen wird ;

(c10) nach erfolgter Belichtung und Sperren des Verschlusses (20) für den weiteren Durchtritt des Fotostrahlengangs (16) wird das Strahlenteiler-System (1) wieder in die Ausgangsposition – der Glaswürfel (1a) also in Wirkstellung – zurückgeführt, wobei gleichzeitig die Lampe (8) eingeschaltet, der Drehspiegel (11) in den Meßstrahlengang (10) geschwenkt, die Dunkelklappen (9 bzw. 12) weggeklappt und das Bildaufnahmemedium weitertransportiert werden.

5. Verfahren nach einem der Ansprüche 1 und 4, **dadurch gekennzeichnet**, daß die zeitliche Aufeinanderfolge der Teil-Verfahrensschritte (c1) bis (c4) eine beliebige ist.

6. Verfahren nach einem der Ansprüche 2 und 3, **dadurch gekennzeichnet**, daß die zeitliche Aufeinanderfolge der jeweiligen Teil-Verfahrensschritte (c1) bis (c5) eine beliebige ist.

7. Verfahren nach mindestens einem der vorhergehenden Ansprüche, **dadurch gekennzeichnet**, daß zusätzlich eine Farbtemperaturmessung durch Einfügen eines Umlenkspiegels (29) in den Meßstrahlengang (10) erfolgt, wobei das dadurch abgezweigte Farbtemperatur-Meßstrahlenbündel (17) nach Durchtritt durch ein Bildaufspaltungs-Element, beispielsweise ein Linien- oder Prismen-Raster (30), in zwei Teilbündel (17a ; 17b) aufgeteilt wird derart, daß das erste Teilbündel (17a) nach Passieren eines Blaufilters (31) und das zweite Teilbündel (17b) nach Passieren eines Rotfilters (32) auf je einen Lichtempfänger (33 bzw. 34), beispielsweise Silizium-Dioden, fällt.

8. Verfahren nach mindestens einem der Ansprüche 1 bis 6, **dadurch gekennzeichnet**, daß zusätzlich eine Computerblitz-Einrichtung durch Einfügen eines Umlenkspiegels (29) in den Meßstrahlengang an das Gesamtsystem optisch angekoppelt wird, wobei die mikrofotografischen Funktionen automatisch auf Integralmessung geschaltet werden und im Steuergerät (28) automatisch eine Blitz-Bereitschaft realisiert ist.

9. Mikrofotografische Vorrichtung zur Durchführung des Verfahrens nach mindestens einem der vorhergehenden Ansprüche mit einem Mikroskop-Tubus mit Rückspiegeleinrichtung und einem Fotookular, dem eine Einrichtung zur Messung der Helligkeit eines Objektdetails sowie Markierungen zur Sichtbarmachung mindestens eines Detailmeßfeldes und des Bildfeldes einer Kamera im Beobachtungsstrahlengang nachgeordnet sind, wobei eine das Detailmeßfeld in der Funktionsebene, die eine zum Okularzwischenbild konjugierte Ebene ist, in dem dem gesamten Bildfeld zugeordneten Bereich verstellbar ausgebildet und die Detailmeßblende in einem ersten Beleuchtungsstrahlengang sowie ein die Bildfeldmarkierung enthaltender Träger in einem zweiten Beleuchtungsstrahlengang angeordnet ist, daß ein die beiden Beleuchtungs-Teilstrahlengänge vereinigender erster Strahlenteiler vorgesehen und ein zweiter Strahlenteiler derart zwischen dem Kameraverschluß und der Okularoptik des Mikroskops angeordnet ist, daß die durch die vereinigten Beleuchtungs-Teilstrahlengänge übertragenen Bilder der Detailmeßblende und der Bildfeldmarkierung in die Okularzwischenbildebene überlagert eingespiegelt werden, **dadurch gekennzeichnet**, daß der zweite Strahlenteiler ein Strahlenteiler-System (1) ist, das in der optischen Mikroskopachse (26) querverschieblich zu dieser angeordnet ist, wobei das motorisch positionierbare Strahlenteiler-System (1) mindestens zwei Strahlenumlenkelemente (1a, 1b bzw. 1a, 1c) enthält, von denen das eine ein Glaswürfel (1a) mit diagonaler Vollverspiegelungsfläche und das andere ein Strahlenteiler-Würfel (1c) mit diagonaler Teilerspiegel-Fläche (1b) mit einem Transmissions-/Reflexions-Verhältnis von 50/50 bzw. mit diagonaler Teilerspiegel-Fläche (1c) mit einem Transmissions-/ReflexionsVerhältnis > 1 ist,und im Beleuchtungsstrahlengang (15) für die Detailmeßblende (24) zwischen der Lampe (8) und einem in den Meßstrahlengang (10) einbringbaren vollverspiegelten Drehspiegel (11) eine ein- und ausschwenkbare Dunkelklappe (9) angeordnet ist.

10. Vorrichtung nach Anspruch 9, **dadurch gekennzeichnet**, daß der Strahlenteiler-Würfel (1c) ein diskretes Transmissions-/Reflexions-Verhältnis zwischen 95/5 und 99,5/0,5 – vorzugsweise 99/1 – aufweist.

11. Vorrichtung nach Anspruch 9, **dadurch**

gekennzeichnet, daß das Strahlenteiler-System (1) neben dem Glaswürfel (1a) mit diagonaler Vollverspiegelungsfläche mindestens zwei Strahlenteiler-Würfel mit diskreten Transmissions-/Reflexions-Verhältnissen ≥ 1 aufweist.

12. Vorrichtung nach mindestens einem der Anspüche 9 bis 11, **dadurch gekennzeichnet**, daß die Strahlenteiler Neutral- und/oder dichromatische Teilerflächen aufweisen.

13. Vorrichtung nach mindestens einem der Ansprüche 9 bis 12, **dadurch gekennzeichnet**, daß zusätzlich ein in den Meßstrahlengang (10) einbringbarer Umlenkspiegel (29) vorgesehen ist, von dem ein FarbtemperaturMeßstrahlengang (17) ausgeht, welcher nach Durchtritt durch ein Raster (30) in zwei, Teilstrahlenbündel (17a, 17b) aufgespalten wird, die nach Passieren eines Blau- bzw. eines Rotfilters (31 bzw. 32) jeweils auf einen Lichtempfänger (33 bzw. 34) auftreffen.

14. Vorrichtung nach mindestens einem der Ansprüche 9 bis 12, **dadurch gekennnzeichnet**, daß zur Erzielung eines Transmissions-/Reflexions-Verhältnisses der Teilerspiegel-Fläche des Strahlenteiler-Würfels (1c) zwischen 95/5 und 99,5/0,5 zwischen der Brechzahl des Prismenmaterials und derjenigen des Kittschichtmaterials des Strahlenteilerwürfels (1c) jeweils eine diskrete Differenz besteht.

## Claims

1. Method for the photographing of microscopic objects with consideration of illumination time values to be determined as well as for rendering visible a variably located measurement spot and a photograph format marking before and after taking the photograph, characterised thereby, that a beam splitter system (1), which is arranged to be transversely displaceable in the photo-beam path (16) and displays splitter surfaces of different transmission/reflection ratios (1b ; 1c) and additionally a fully reflecting surface (1a), a rotary mirror (11) arranged before a light receiver (21) in the measurement beam path (10) as well as a darkening flap (9) arranged in the illumination beam path (15) for the realisation of microphotographic recordings with shortened and stored illumination times while performing a spot measurement by means of the variably located measurement spot, are driven and positioned according to the following method steps :

(a) the beam splitter system (1) is positioned in the optical microscope axis (26) in such a manner that the fully reflecting surface of the glass cube (1a) in diagonal setting deflects the illumination beam paths (14 or 15) by way of a photo-ocular (19) into the microscope eyepiece (5) ;

(b) after setting of the image focus, selection of the image detail of the object (6) and positioning of a variably located detail measurement stop (24) into operative setting by the observer (27), there takes place

(c) an actuation of a release key (22) at a control device (28), whereby the following functions are initiated :

(c1) a lamp (8) is switched off ;

(c2) the darkening flap (9) pivots into the illumination beam path (15) ;

(c3) the rotary mirror (11) pivots out of the measurement beam path (10) ;

(c4) a further darkening flap (12) in the observation beam path (13) tilts into operative setting ;

(c5) the light receiver (21) measures the light passing through the detail measurement stop (24) and the value measurement by the light receiver (21) is then fed to an illumination control system (2) and stored ;

(c6) the beam splitter system (1) is now positioned in such a manner that the beam splitter cube (1c) gets transversely to the optical microscopic axis (26) into diagonal setting by that splitter surface which displays a transmission/reflection ratio of 99/1 ;

(c7) the illumination control system (2) in accordance with the respectively stored value opens a shutter (20) for an illumination of an image-recording medium, for example a film, arranged in the plane (18) ;

(c8) after illumination has taken place and closure of the shutter (20) to the further passage of the photo-beam path (16), the beam splitter system (1) is brought back again into the initial setting, thus the glass cube (1a) into operative setting, while at the same time the lamp (8) is switched on, the darkening flaps (9 or 12) are tilted away, the rotary mirror (11) is pivoted into the measurement beam path (10) and the image-recording medium is transported further.

2. Method for the photographing of microscopic objects with consideration of illumination time values to be determined as well as for rendering visible a variably located measurement spot and a photograph format marking before and after taking the photograph, characterised thereby, that a beam splitter system (1), which is arranged to be transversely displaceable in the photo-beam path (16) and displays splitter surfaces of different transmission/reflection ratios (1b ; 1c) and additionally a fully reflecting surface (1a), a rotary mirror (11) arranged before a light receiver (21) in the measurement beam path (10) as well as a darkening flap (9) arranged in the illumination beam path (15) for the realisation of microphotographic recordings with shortened and corrected illumination times while performing an illumination correction with integral measurement, are driven and positioned according to the following method steps :

(a) the beam splitter system (1) is positioned in the optical microscope axis (26) in such a manner that the fully reflecting surface of the glass cube (1a) in diagonal setting deflects the illumination beam path (14) by way of a photo-ocular (19) into the microscope eyepiece (5) ;

(b) after setting of the image focus and selection of the image detail of the object (6) by the observer (27), there takes place

(c) an actuation of a release key (22) at a control device (28), whereby the following functions are initiated :

(c1) a lamp (8) is covered by the darkening flap (9) being left in the illumination beam path (18) ;

(c2) the rotary mirror (11) is pivoted out of the measurement beam path (10) ;

(c3) a detail measurement stop carrier (7) is pivoted out of the measurement beam path (10) ;

(c4) a further darkening flap (12) is introduced into the observation beam path (13) ;

(c5) the beam splitter system (1) is now positioned in such a manner that the beam splitter cube (1c) gets transversely to the optical microscope axis (26) into diagonal setting by that splitter surface which displays a transmission/reflection ratio of 99/1 ;

(c6) the light receiver (21) measures the light passing through a fixedly located integral measurement stop (23), which is exposed through displacement of the carrier (7) displaying the detail measurement stop (24), and the measured value is then fed to an illumination control system (2) and stored ;

(c7) the illumination control system (2) in accordance with the respectively stored value opens a shutter (20) for an illumination of an image-recording medium, for example a film, arranged in the plane (18), wherein the illumination measurement takes place during the illumination process and, in the case of varying object brightnesses, a corresponding correction of the illumination time is undertaken simultaneously ;

(c8) after illumination has taken place and closure of the shutter (20) to the further passage of the photo-beam path (16), the beam splitter system (1) is brought back again into the initial setting, thus the glass cube (1a) into operative setting, while at the same time the lamp (8) is uncovered, the rotary mirror (11) is pivoted into the measurement beam path (10), the darkening flaps (9 or 12) are tilted away and the image-recording medium is transported further.

3. Method for the photographing of microscopic objects with consideration of illumination time values to be determined as well as for rendering visible a variably located measurement spot and a photograph format marking before and after taking the photograph, characterised thereby, that a beam splitter system (1), which is arranged to be transversely displaceable in the photo-beam path (16) and displays splitter surfaces of different transmission/reflection ratios (1b ; 1c) and additionally a fully reflecting surface (1a), a rotary mirror (11) arranged before a light receiver (21) in the measurement beam path (10) as well as a darkening flap (9) arranged in the illumination beam path (15) for the realisation of microphotographic recordings with corrected illumination times while performing a spot measurement by means of the variably located measurement spot, are driven and positioned according to the following method steps :

(a) the beam splitter system (1) is positioned in the optical microscope axis (26) in such a manner that the glass cube (1a) with full mirror in diagonal setting deflects the illumination beam paths (14 and 15) by way of a photo-ocular (19) into the microscope eyepiece (5) ;

(b) after setting of the image focus and selection of the image detail of the object (6) by the observer (27), a variably located detail measurement stop (24) is illuminated rearwardly, while the darkening flap (9) is tilted out of the illumination beam path (15), and brought into congruency with a place of the object (6), which is representative of a correct illumination ;

(c) thereafter, a release key (22) at a control device is actuated, whereby the following functions are initiated :

(c1) a lamp (8) is switched off ;

(c2) the darkening flap (9) pivots into the illumination beam path (15) ;

(c3) the rotary mirror (11) is pivoted out of the measurement beam path (10) ;

(c4) a further darkening flap (12) is introduced into the observation beam path (13) ;

(c5) the beam splitter system (1) is now positioned in such a manner that the beam splitter cube (1b) gets into diagonal setting relative to the optical microscope axis (26) by that splitter surface, which displays a transmission/reflection ratio of 50/50 ;

(c6) the light receiver (21) measures the incident light and the measured value is then fed to an illumination control system (2) and

(c7) the illumination control system (2), subject to consideration of the measured quantity of light, opens a shutter (20) for an illumination of an image-recording medium, for example a film, arranged in the plane (18), while arising brightness changes of the object (6) are corrected ;

(c8) after illumination has taken place and closure of the shutter (20) to the further passage of the photo-beam path (16), the beam splitter system (1) is brought back again into the initial setting, thus the glass cube (1a) into operative setting, while at the same time the lamp (8) is switched on, the rotary mirror (11) is pivoted into the measurement beam path (10), the darkening flaps (9 or 12) are tilted away and the image-recording medium is transported further.

4. Method for the photographing of microscopic objects with consideration of illumination time values to be determined as well as for rendering visible a variably located measurement spot and a photograph format marking before and after taking the photograph, characterised thereby, that a beam splitter system (1), which is arranged to be transversely displaceable in the photo-beam path (16) and displays a beam splitter cube (1c) with a splitter layer with a discrete transmission/reflection ratio lying between 95/5 and 99.5/0.5 and additionally a glass cube with a fully reflecting surface (1a), a rotary mirror (11) arranged before a light receiver (21) in the measurement beam path (10) as well as a darkening flap (9) arranged in the illumination beam path (15) for the realisation of microphotographic recordings with shortened and corrected illumination times while performing a spot measurement by means of the variably located measurement spot, are driven and positioned according to the following method steps :

(a) the beam splitter system (1) is positioned in the optical microscope axis (26) in such a manner that the fully reflecting surface of the cube (1a) in diagonal setting deflects the illumination beam paths (14 or 15) by way of a photo-ocular (19) into the microscope eyepiece (5) ;

(b) after setting of the image focus, selection of the image detail of the object (6) and positioning of a variably located detail measurement stop (24) into operative setting by the observer (27), there takes place

(c) an actuation of a release key (22) at a control device (28), whereby the following functions are initiated :

(c1) the lamp (8) is switched off ;

(c2) the darkening flap (9) pivots into the illumination beam path (15) ;

(c3) the rotary mirror (11) is pivoted out of the measurement beam path (10) ;

(c4) a further darkening flap (12) in the observation beam path (13) tilts into the operative setting ;

(c5) the light receiver (21) measures the light passing through the detail measurement stop (24) and the value measurement by the light receiver (21) is then fed to an illumination control system (2) and stored ;

(c6) the beam splitter system (1) is now positioned in such a manner that the beam splitter cube (1b) gets into diagonal setting relative to the optical microscope axis (26) ;

(c7) the detail measurement carrier (7) with the detail measurement stop (24) pivots out of the measurement beam path (10) ;

(c8) the light receiver (21) measures the light passing through the integral measurement stop (23) and the value measured by the light receiver (21) is then again fed to the illumination control system (2), which then associates the just measured value with such an illumination time as corresponds to the time which was determined by the partial step (c5);

(c9) the illuminating control system (2) opens a shutter (20) for an illumination of an image-recording medium, for example a film, arranged in the plane (18), while the illumination measurement takes place during the illumination process and, in the case of varying object brightnesses, a corresponding correction of the illumination time is undertaken simultaneously ;

(c10) after illumination has taken place and closure of the shutter (20) to the further passage of the photo-beam path (16), the beam splitter system (1) is brought back again into the initial setting, thus the glass cube (1a) into operative setting, while at the same time the lamp (8) is switched on, the rotary mirror (11) is pivoted into the measurement beam path (10), the darkening flaps (9 or 12) are tilted away and the image-recording medium is transported further.

5. Method according to one of the claims 1 and 4, characterised thereby, that the time sequence of the partial steps (c1) to (c4) is as desired.

6. Method according to one of the claims 2 and 3, characterised thereby, that the time sequence of the respective partial method steps (c1) to (c5) is as desired.

7. Method according to at least one of the preceding claims, characterised thereby, that a colour temperature measurement takes place in addition through insertion of a deflecting mirror (29) into the measurement beam path (10), wherein the colour temperature measurement beam bundle (17) branched off thereby is divided after passage through an image-splitting element, for example a line or prism raster (30), into two partial bundles (17a ; 17b) in such a manner that the first partial bundle (17a) after passage through a blue filter (31) and the second partial bundle (17b) after passage through a red filter (32) each fall on a respective light receiver (33 or 34), for example silicon diodes.

8. Method according to at least one of the claims 1 to 6, characterised thereby, that a computer flash equipment is in addition optically coupled to the entire system through insertion of a deflecting mirror (29) into the measurement beam path (10), wherein the microphotographic functions are switched automatically to integral measurement and a readiness for flash is realised automatically in the control device (28).

9. Microphotographic device for the performance of the method according to at least one of the preceding claims, with a microscope tubus with rearward mirror equipment and a photo-ocular, behind which in the observation beam path are arranged an equipment for the measurement of the brightness of an object detail as well as markings for rendering visible at least one detail measurement field and the image field of a camera, wherein the one detail measurement field is constructed to be displaceable in the function plane, which is a plane conjugate with the intermediate eyepiece image, in the region associated with the entire image field and the detail measurement stop is arranged in a first illumination beam path as well as a carrier containing the image field marking is arranged in a second illumination beam path, that a first beam splitter uniting both the partial illumination beam paths is provided and a second beam splitter is arranged in such a manner between the camera shutter and the eyepiece optical system of the microscope that the images, which are transmitted by the united partial illumination beam paths, of the detail measurement stop and of the image field marking are reflected superposed into the intermediate eyepiece image plane, characterised thereby, that the second beam splitter is a beam splitter system (1), which is arranged in the optical microscope axis (26) to be displaceable transversely to this, wherein the beam splitter system (1) is positionable through a motor and contains at least two beam-deflecting elements (1a, 1b or 1a, 1c), of which the one is a glass cube (1a) with diagonal fully reflecting surface and the other is a beam splitter cube (1c) with a transmission/reflection ratio of 50/50 or with a diagonal splitter surface (1b) with a transmission/reflection ratio that is greater than 1, and a darkening flap (9) is arranged to be pivotable into and out of the illumination beam path (15) for the detail measurement stop (24) between the lamp (8) and a fully silvered rotary mirror (11) introducible into the measurement beam path (10).

10. Device according to claim 9, characterised thereby, that the beam splitter cube (1c) displays a discrete transmission/reflection ratio between 95/5 and 99.5/0.5, preferably 99/1.

11. Device according to claim 9, characterised thereby, that the beam splitter system (1), apart from the glass cube (1a) with diagonal fully reflecting surface, displays at least two beam splitter cubes with discrete transmission/reflection ratios equal to or greater than 1.

12. Device according to at least one of the claims 9 to 11, characterised thereby, that the beam splitters display neutral and/or dichromatic splitter surfaces.

13. Device according to at least one of the claims 9 to 12, characterised thereby, that a deflecting mirror (29) is provided in addition, which is introducible into the measurement beam path (10) and from which a colour temperature measurement beam path (17) emanates, which is after passage through a raster (30) split into two partial beam bundles (17a, 17b), which after passing respectively through a blue filter (31) and through a red filter (32) impinge on respective light receivers (33 and 34).

14. Device according to at least one of the claims 9 to 12, characterised thereby, that a discrete difference exists each time between the refractive index of the prism material and that of the cement layer material of the beam splitter cube (1c) for the achievement of a transmission/reflection ratio of the splitter mirror surface of the beam splitter cube (1c) between 95/5 and 99.5/0.5.

## Revendications

1. Procédé pour photographier des objets microscopiques en tenant compte des valeurs de temps de pose à déterminer, ainsi que pour rendre visible un spot de mesure variable en position et un marquage du format de prise de vue avant et après la prise de vue, caractérisé en ce qu'un système diviseur de faisceau (1) est monté mobile transversalement dans le trajet de faisceau photographique (16) et qui comprend des surfaces de division ayant des rapports transmission/réflexion (1b ; 1c) différents et, supplémentairement, une surface de réflexion totale (1a), un miroir rotatif (11) disposé dans le trajet de faisceau de mesure (10) devant un récepteur de lumière (21) ainsi qu'un volet obturateur (9) disposé dans un trajet de faisceau d'éclairement (15) pour la réalisation de prises de vue microphotographique avec des temps de pose raccourcis et stockés, tout en faisant une mesure de spot à l'aide du spot de mesure variable en position, sont commandés et positionnés selon les étapes de procédé suivantes :

(a) le système diviseur de faisceau (1) est positionné dans l'axe de microscope optique (26) de telle façon que la surface de réflexion totale du cube de verre (1a) dévie dans la position diagonale les trajets de faisceau d'éclairement (14 ou 15) par un oculaire photographique (19) dans l'oculaire de microscope (15) ;

(b) après le réglage de la netteté de l'image, le choix de la portion d'image de l'objet (6) et le positionnement d'un diaphragme de mesure de détail (24) variable en position, par l'observateur (27), dans la position d'actionnement, s'effectue

(c) l'actionnement de la touche de déclenchement (22) sur un appareil de commande (28), ce qui déclenche les fonctions suivantes :

(c1) une lampe (8) s'arrête ;

(c2) le volet obturateur (9) pivote dans le trajet de faisceau d'éclairement (15) ;

(c3) le miroir rotatif (11) pivote hors du trajet de faisceau de mesure (10) ;

(c4) un volant obturateur supplémentaire (12) bascule dans le trajet de faisceau d'observation (13), dans sa position active ;

(c5) le récepteur de lumière (21) mesure la lumière traversant le diaphragme de mesure de détail (24), la valeur mesurée par le récepteur de lumière (21) étant amenée ensuite à un système de commande d'éclairement (2) et stockée ;

(c6) le système diviseur de faisceau (1) est maintenant positionné de telle façon que le cube diviseur de faisceaux (1c) parvienne avec la surface de division dans la position diagonale perpendiculaire à l'axe de microscope (26), qui présente un rapport transmission/ réflexion de 99/1 ;

(c7) le système de commande d'éclairement (2) ouvre après indication de la valeur respectivement stockée l'obturateur (20) pour l'éclairement d'un milieu de prise d'image disposé dans le plan (15), par exemple d'un film ;

(c8) après l'éclairement et la fermeture de l'obturateur (20) pour le passage du trajet de faisceau photographique (16), le système diviseur de faisceau (1) est ramené à nouveau dans sa position de départ-donc le cube de verre (1a) dans sa position active-, la lampe (8), les volets obturateurs (9 ou 12) s'écartant simultanément par basculement, le miroir rotatif (11) pivotant dans le trajet de faisceau de mesure (10) et le milieu de prise de vue étant avancé.

2. Procédé pour photographier des objets microscopiques en tenant compte des valeurs de temps de pose à déterminer ainsi que pour rendre visible un marquage de format de prise de vue avant et après la prise de vue, caractérisé en ce qu'un système diviseur de faisceau (1) qui est monté déplaçable perpendiculairement dans le trajet de faisceau photographique (16) et comprend des surfaces de division ayant des rapports transmission/réflexion différents et, supplémentairement, une surface de réflexion totale (1a), un miroir rotatif (11) disposé dans le trajet de faisceau de mesure (10) en avant d'un récepteur de lumière (21) ainsi qu'un volet obturateur (9) disposé dans le trajet de faisceau d'éclairement (15) pour la réalisation de prises de vue microphotographiques avec des temps de pose raccourcis et corrigés, tout en effectuant une correction de l'éclairement lors d'une mesure intégrale, sont commandés et positionnés selon les étapes de procédé suivantes:

(a) le système diviseur de faisceau (1) est positionné dans l'axe de microscope optique (26) de telle façon que la surface de réflexion totale du cube en verre (1a), dans la position diagonale, dévie le trajet de faisceau d'éclairement (14) par l'intermédiaire d'un oculaire photographique (19) dans l'oculaire de microscope (5) ;

(b) après le réglage de la netteté d'image et le choix de la zone d'image de l'objet (6) par l'observateur (27), il s'effectue

(c) un actionnement d'une touche de déclenchement (22) sur un appareil de commande (28), ce qui déclenche les fonctions suivantes :

(c1) une lampe (8) est recouverte, un volet d'obturation (9) étant laissé dans le trajet de faisceau d'éclairement (15) ;

(c2) le miroir rotatif (11) est amené à pivoter hors du trajet de faisceau de mesure (10) ;

(c3) un support de diaphragme de mesure de détail (7) est amené à pivoter hors du trajet de faisceau de mesure (10) ;

(c4) un autre volet d'obturation (15) est introduit dans le trajet de faisceau d'observation (13) ;

(c5) le système diviseur de faisceaux (1) est maintenant positionné de telle façon que le cube diviseur de faisceaux (1c) parvienne par sa surface de division dans la direction diagonale par rapport à l'axe de microscope optique (26), qui comprend un rapport transmission/ réflexion de 99/1 ;

(c6) le récepteur de lumière (21) mesure la lumière parvenant à travers le diaphragme de mesure intégrale immobile (23), qui a été dégagé par un déplacement du support (7) comprenant le diaphragme de mesure de détail (24), hors du trajet de faisceau de mesure (10), et la valeur mesurée est ensuite amenée dans un système de commande d'éclairement (2) et stockée ;

(c7) le système de commande d'éclairement (2) ouvre, après indication de la valeur respective mesurée, un obturateur (20) pour l'éclairement d'un milieu de prise d'image disposé dans le plan (18), par exemple d'un film, la mesure d'éclairement s'effectuant pendant le processus d'éclairement et une correction correspondante du temps de pose étant effectuée simultanément, lorsque des luminosités d'objets varient,

(c8) après que l'éclairement et la fermeture de l'obturateur (20) pour un passage du trajet de faisceau photographique (16),aient été effectuées le système diviseur de faisceau (1) est ramené à nouveau dans la position de départ-le cube de verre (1a) ainsi en position active-, en même temps la lampe (8) étant découverte, le miroir rotatif (11) étant amené à pivoter dans le trajet de faisceau de mesure (10), les volets obturateurs (11 ou 12) étant écartés par basculement et le milieu de prise d'image étant avancé.

3. Procédé pour photographier des objets microscopiques en prenant en compte des valeurs de temps de pose à déterminer ainsi que pour rendre visible un spot de mesure variable en position et un marquage de format de prise de vue avant et après la prise de vue, caractérisé en ce qu'un système diviseur de faisceau (1) qui est monté mobile perpendiculairement dans le trajet de faisceaux photographique (16) et comprend des surfaces de division ayant des rapports transmission/réflexion différents (1b ; 1c), et, supplémentairement, une surface de réflexion totale, un miroir rotatif (11) disposé dans le trajet de faisceau de mesure (10) devant un récepteur de lumière (21) ainsi qu'un volet obturateur (9) disposé dans le trajet de faisceau d'éclairement (15) pour la réalisation de prises de vue microphotographique avec des temps de pose corrigés, tout en exécutant une mesure de spot à l'aide du spot de mesure variable en position, sont commandés et positionnés selon les étapes de procédé suivantes :

(a) le système diviseur de faisceau (1) est positionné dans l'axe de microscope optique (26) de telle façon que le cube de verre (1a), avec le miroir plein dans la position diagonale, dévie les trajets de faisceau d'éclairement (14 et 15) par l'intermédiaire d'un oculaire photographique (19) dans l'oculaire de microscope (5) ;

(b) après le réglage de la netteté d'image et le choix de la portion d'image de l'objet (6) par l'observateur (27), un diaphragme de mesure de détail (24) variable en position est éclairé par l'arrière, avec le volet obturateur (9) basculé hors du trajet de faisceau d'éclairement (15), et amené en une position de recouvrement de l'emplacement de l'objet (6), qui est représentatif d'un éclairement correct ;

(c) après une touche de déclenchement (22) sur un appareil de commande est actionné, ce qui déclenche les fonctions suivantes :

(c1) une lampe (8) est mise hors service ;

(c2) le volet obturateur (9) pivote dans le trajet de faisceau d'éclairement (15) ;

(c3) le faisceau rotatif (11) est amené à pivoter hors du trajet de faisceau de mesure (10) ;

(c4) un volet obturateur supplémentaire (12) est introduit dans le trajet de faisceau d'observation (13) ;

(c5) le système diviseur de faisceau (1) est maintenant positionné de telle façon que le cube diviseur de faisceaux (1b) parvienne avec sa surface de division dans la position diagonale par rapport à l'axe de microscope (26), qui présente un rapport transmission/réflexion de 50/50 ;

(c6) le récepteur de lumière (21) mesure la lumière incidente et la valeur mesurée est ensuite appliquée à un système de commande d'éclairement (2) et

(c7) le système de commande d'éclairement (2) ouvre, en prenant en compte la quantité de lumière mesurée, un obturateur (20) pour un éclairement d'un milieu de prise d'image disposé dans le plan (18), par exemple d'un film, les variations de luminosité de l'objet étant corrigées ;

(c8) après que l'éclairement et la fermeture de l'obturateur (20) pour le passage du trajet de faisceau photographique (16) aient effectué, le système diviseur de faisceau (1) est ramené dans sa position de départ-le cube de verre (1a) étant dans sa position active-, en même temps la lampe (8) étant mise en service, le miroir rotatif (11) étant amené à pivoter dans le trajet de faisceaux de mesure (10), les volets obturateurs (9 ou 12) étant rabattus ou basculés en dehors et le milieu de prise d'image étant avancé ou transporté.

4. Procédé pour photographier des objets microscopiques, en prenant en compte des valeurs de temps de pose à déterminer, ainsi que pour rendre visible un spot de mesure variable en position et un marquage de format de prise de vue avant et après la prise de vue, caractérisé en ce qu'un système diviseur de faisceau qui est monté mobile perpendiculairement dans le trajet de faisceau photographique (16) et comporte un cube diviseur de faisceau (1c) avec une couche de division ayant un rapport transmission/réflexion discret, compris entre 95/5 et 99,5/0,5 et, supplémentairement, un cube de verre avec une surface de réflexion totale (1a), un miroir rotatif (11) disposé dans un trajet de faisceau de mesure (10) devant un récepteur de lumière (21) ainsi qu'un volet obturateur disposé dans le trajet de faisceau d'éclairement (15) pour la réalisation de prises de vue microphotographiques avec des temps de pose raccourcis et corrigés, tout en effectuant une mesure de spot à l'aide du spot de mesure variable en position, sont commandés et positionnés selon les étapes de procédé suivantes :

(a) le système diviseur de faisceau (1) est positionné dans l'axe de microscope (26) de telle façon que la surface de réflexion totale du cube (1a) dans la position diagonale dévie les trajets de faisceau d'éclairement (14 ou 15) par l'intermédiaire d'un oculaire photographique (19) dans l'oculaire de microscope (5) ;

(b) après le réglage de la netteté d'image, le choix de la portion d'image de l'objet (6) et le positionnement d'un diaphragme de mesure de détail (24) variable en position par l'observateur (27) dans la position active, il s'effectue un

(c) actionnement de la touche de déclenchement (22) sur un appareil de commande (24), ce qui déclenche les fonctions suivantes :

(c1) la lampe (8) se met en service ;

(c2) le volet d'obturation (9) pivote dans le trajet de faisceau d'éclairement (15) ;

(c3) le miroir rotatif (11) pivote hors du trajet de faisceau de mesure (10) ;

(c4) un volet d'obturateur supplémentaire (12) est rabattu dans le trajet de faisceau d'observation dans la position active ;

(c5) le récepteur de lumière (21) mesure la lumière passant à travers le diaphragme de mesure de détail (24), la valeur mesurée par le récepteur de lumière (21) est ensuite appliquée au système de commande d'éclairement (2) et stockée ;

(c6) le système diviseur de faisceau (1) est maintenant positionné de telle façon que le cube diviseur de faisceau (1c) parvienne dans la position diagonale par rapport à l'axe de microscope optique (26) ;

(c7) le support de diaphragme de mesure de détail (7), avec le diaphragme de mesure de détail (24), pivote hors du trajet de faisceau de mesure (15) ;

(c8) le récepteur de lumière (21) mesure la lumière passant à travers le diaphragme de mesure intégrale (23) et la valeur mesurée par le récepteur de lumière (24) est à nouveau appliquée au système de commande d'éclairement (2) qui ensuite associe à la valeur venant d'être mesurée un tel temps de pose qui correspond au temps qui a été établi selon l'étape partielle (c5) ;

(c9) le système de commande d'éclairement (2) ouvre un obturateur (20) pour un éclairement d'un milieu de prise d'image disposé dans le plan (18), par exemple d'un film, la mesure d'éclairement étant effectuée pendant le processus d'éclairement et une correction correspondante du temps d'éclairement étant effectuée simultanément lorsque des luminosités d'objets varient ;

(c10) Après que l'éclairement et la fermeture de l'obturateur (20) pour la continuation du passage du trajet de faisceau photographique (16) aient été effectués, le système diviseur de faisceau (1) est ramené dans sa position de départ-le cube de verre (1a) est alors dans la position active-, en même temps la lampe (8) étant mise dans le circuit, le miroir rotatif (11) étant amené à pivoter dans le trajet de faisceau de mesure (10), les volets obturateurs (9 ou 12) étant rabattus dehors et le milieu de prise d'image étant transporté ou avancé.

5. Procédé selon l'une des revendications 1 et 4, caractérisé en ce que la séquence dans le temps des étapes de procédé partielles (c1) à (c4) est quelconque.

6. Procédé selon l'une des revendications 2 et 3, caractérisé en ce que la séquence dans le temps des étapes de procédé partielles respectives (c1 à c5) est quelconque.

7. Procédé selon au moins l'une des revendications précédentes, caractérisé en ce que, supplémentairement, il est effectuée une mesure de la température de couleur par insertion d'un miroir de déviation (29) dans le trajet de faisceau de mesure (10), le pinceau de faisceaux de mesure de température de couleur (17) ainsi dévié étant divisé après le passage à travers un élément de dédoublement d'image, par exemple un motif de lignes ou de prismes (30), en deux pinceaux partiels (17a ; 17b) de telle façon que le premier pinceau partiel (17a), après le passage à travers un filtre bleu (31) et le deuxième pinceau partiel (17b) après son passage à travers un filtre rouge (32) parviennent chacun sur un récepteur de lumière (33 ou 34), par exemple des diodes de silicium.

8. Procédé selon au moins l'une des revendications 1 à 6, caractérisé en ce que supplémentairement à une installation de flash d'ordinateur, par insertion d'un miroir de déviation (29) dans le trajet de faisceau de mesure est relié optiquement au système total, les fonctions microphotographiques étant commutées automatiquement à une mesure intégrale et un état de disponibilité de flash étant réalisé automatiquement dans l'appareil de commande (28).

9. Dispositif microphotographique pour la mise en oeuvre du procédé selon au moins une des revendications précédentes, avec un tube de microscope avec un dispositif de miroir de réflexion et un oculaire photographique en arrière duquel est disposée une installation pour la mesure de luminosité d'un détail d'objet ainsi que des marquages pour la visualisation d'au moins un champ de mesure de détail et du champ d'image d'une caméra dans le trajet de faisceau d'observation, le champ de mesure de détail dans le plan de fonction qui est un plan conjugué à l'image intermédiaire d'oculaire, étant configurée pour être déplaçable dans la zone associée au champ d'image entier et le diaphragme de mesure de détail étant disposé dans un premier trajet de faisceau d'éclairement ainsi qu'un support comprenant le marquage de champ d'image étant disposé dans un second trajet de faisceau de mesure, qu'un premier diviseur de faisceau réunissant les deux trajets de faisceau partiels d'éclairement étant prévu et un second diviseur de faisceau étant disposé de telle façon entre l'obturateur de caméra et l'optique d'oculaire du microscope que les images transmises par les trajets de faisceau partiels d'éclairement réunis soient d'être insérées par réflexion dans le plan d'image intermédiaire d'oculaire, à l'état superposé, caractérisé en ce que le deuxième diviseur de faisceau est un système diviseur de faisceau (1) qui est monté perpendiculairement déplaçable dans l'axe de microscope optique (26), par rapport à celle-ci, le système diviseur de faisceau (1) susceptible d'être positionné par moteur comprend au moins deux éléments de déviation de faisceau (1a, 1b, ou 1a, 1c), dont l'un est un cube de verre (1a) ayant une surface de réflexion totale diagonale et l'autre est un cube diviseur de faisceau (1c) ayant une surface de miroir de division diagonale (1b) avec un rapport transmission-/réflexion de 50/50 ou ayant une surface de miroir de division (1c) avec un rapport transmission/ réflexion > 1, et dans le trajet de faisceau d'éclairement (15) pour le diaphragme de mesure de détail (24) est disposé entre la lampe (8) et un miroir rotatif (11) entièrement réflecteur susceptible d'être inséré dans le trajet de faisceau de mesure (10) est disposé un volet obturateur (9) susceptible de pivoter vers l'intérieur et l'extérieur.

10. Dispositif selon la revendication 9, caractérisé en ce que le cube diviseur de faisceau (1c) présente un rapport transmission/réflexion discret compris entre 95/5 et 99,5/0,5, de préférence de 99/1.

11. Dispositif selon la revendication 9, caractérisé en ce que le système diviseur de faisceau (1) comprend, à côté du cube de verre (1a) avec une surface de réflexion totale diagonale au moins deux cubes diviseurs de faisceau ayant des rapports transmission/réflexion discrets ≥ 1.

12. Dispositif selon au moins une des revendications 9 à 11, caractérisé en ce que les diviseurs de faisceau comprennent des surfaces de division neutres et/ou dichromatiques.

13. Dispositif selon au moins une des revendications 9 à 12, caractérisé en ce que supplémentairement est prévu dans le trajet de faisceau de mesure (10) un miroir de déviation insérable (29) duquel sort un trajet de faisceau de mesure de température de couleur (17) qui est divisé après son passage à travers une grille ou réseau (30) en deux pinceaux de faisceaux partiels (17a, 17b) qui, après leur passage à travers un filtre bleu ou rouge (31 ou 32) parviennent respectivement sur un récepteur de lumière (33 ou 34).

14. Dispositif selon au moins une des revendications 9 à 12, caractérisé en ce que pour obtenir un rapport transmission/réflexion de la surface de miroir de division du cube diviseur de faisceau (1c), qui est comprise entre 95/5 et 99,5/0,5, il existe chaque fois une différence discrète entre l'indice de réfraction du matériau de prisme et celui du matériau de couche de mastic du cube diviseur de faisceau (1c).

21  35  18  16  8  15  9  10  11  10;15  31  17a  33  14  30  34  29  23  17b  3  24  24  17  32  7  20  1  1c  25  10;14;15  M  1a  1b  22  19  26  15  4  13;15  12  27  5  6  28  2

zu 1
zu 7
zu 8
zu 9
zu 11
zu 12
zu 20
zu 24
von 21